(19) Europäisches Patentamt
European Patent Office
Office européen des brevets

(11) Veröffentlichungsnummer: **0 223 005**
**B1**

(12) # EUROPÄISCHE PATENTSCHRIFT

(45) Veröffentlichungstag der Patentschrift: **02.08.89**

(51) Int. Cl.[4]: **C 08 L 77/00,** C 08 L 51/04, C 08 L 51/00

(21) Anmeldenummer: **86112690.2**

(22) Anmeldetag: **13.09.86**

(54) **Schlagzähe leicht fliessende Polyamidformmassen.**

(30) Priorität: **25.09.85 DE 3534088**

(43) Veröffentlichungstag der Anmeldung: **27.05.87 Patentblatt 87/22**

(45) Bekanntmachung des Hinweises auf die Patenterteilung: **02.08.89 Patentblatt 89/31**

(84) Benannte Vertragsstaaten: **DE FR GB IT**

(56) Entgegenhaltungen:
**EP-A-0 027 198**
**EP-A-0 040 730**
**EP-A-0 058 331**
**DE-C-1 286 302**
**DE-C-2 435 266**

(73) Patentinhaber: **BAYER AG, D-5090 Leverkusen 1 Bayerwerk (DE)**

(72) Erfinder: **Wittmann, Dieter, Dr., Doerperhofstrasse 15, D-4150 Krefeld 1 (DE)**
Erfinder: **Lindner, Christian, Dr., Riehlerstrasse 200, D-5000 Köln 60 (DE)**
Erfinder: **Trabert, Ludwig, Dr., Leydelstrasse 67, D-4150 Krefeld (DE)**
Erfinder: **Binsack, Rudolf, Dr., Bethelstrasse 4a, D-4150 Krefeld (DE)**
Erfinder: **Ott, Karl- Heinz, Dr., Paul- Klee- Strasse 54, D-5090 Leverkusen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 223 005 B1

LIBER, STOCKHOLM 1989

**Beschreibung**

Die Erfindung betrifft besonders gut verarbeitbare Formmassen verbesserter Schlagzähigkeit aus Polyamiden und Pfropfprodukten, die eine spezielle chemische und physikalische Struktur aufweisen.

Schlagzähe thermoplastische Polyamidformmassen, die Pfropfprodukte, d. h. Reaktionsprodukte der Polymerisation harzbildender Monomerer in Gegenwart eines Kautschuks enthalten, sind bekannt: So enthalten gemäß DE-DS-2 435 266 solche Formmassen Pfropfprodukte von Vinylmonomeren und (Meth)Acrylsäure auf Kautschuken. Nach Ja-PS-2 354/71 lassen sich auch Styrol/Acrylnitril-Pfropfpolymerisate verwenden. In DE-PS-3 105 364 werden Mischungen beansprucht, die Pfropfprodukte von (Meth)Acrylsäureestern auf Kautschuke enthalten. In US-PS-4 167 505 wird die Eignung von Pfropfpolymerisaten, deren Pfropfäste größtenteils aus Polyalkylacrylat bestehen, hervorgehoben.

Alle diese Formmassen sind Thermoplaste mit gegenüber Polyamid verbesserter Kerbschlagzähigkeit; die Anwesenheit des Pfropfproduktes beeinträchtigt allerdings die Verarbeitbarkeit insbesondere fließen diese Formmassen im Schmelzzustand schlechter, so daß beim Spritzguß längere Zykluszeiten erforderlich sind. Dies kann zwar durch Erhöhung der Arbeitstemperatur und/oder des Spritzdrucks kompensiert werden, jedoch nimmt dann der thermische Abbau von Polyamid und Pfropfprodukt und der Energieverbrauch zu.

Die in der DE-OS 2 941 025 beschriebenen Formmassen aus Polyamid und Pfropfprodukten aus Mischungen von (Meth)Acrylsäureestern auf Kautschuke zeichnen sich durch gute Tieftemperaturzähigkeit aus. Aber das Pfropfprodukt ist unter den Verarbeitungsbedingungen nicht völlig stabil, was zu Störungen bei der Verarbeitung und zu unzureichender Qualität der Formkörper führen kann.

Es besteht somit Bedarf an einer Polyamidformmasse, die verbesserte Zähigkeit und gleichzeitig verbesserte Verarbeitbarkeit aufweist.

Es wurde nun gefunden, daß solche Formmassen entstehen, wenn man Pfropfprodukte mit bestimmten Kautschukgehalten. Teilchengrößen und Vernetzungsgraden verwendet, deren Pfropfäste aus bestimmten Kombinationen von Methylmethacrylat und primären oder sekundären Alkylacrylaten entstanden sind.

Während somit Zähigkeitserhöhungen (z. B. durch Erhöhung des Pfropfkautschukgehaltes oder Verwendung von höherviskosem Polyamid) auf Kosten des Fließverhaltens gehen, und Verbesserungen der Verarbeitbarkeit (z. B. durch Fließhilfsmittel) im allgemeinen die Zähigkeit senken, findet man hier unerwarteterweise innerhalb eines eng begrenzten Zusammensetzungsbereichs der genannten Pfropfmonomeren sowohl verbesserte Tieftemperaturzähigkeit als auch verbessertes Fließverhalten.

Dieser überraschende Effekt bleibt auch erhalten, wenn man die Wirksamkeit der Pfropfprodukte in den Polyamidformmassen durch Polytetrafluorethylen oder bestimmte Comonomere steigert.

Gegenstand der Erfindung sind somit thermoplastische Formmassen aus:

A. 35 - 99 Gew.-%, bevorzugt 50 - 97 Gew.-%, insbesondere bevorzugt 65 - 95 Gew.-% eines Polyamids,

B. 1 - 65 Gew.-%, bevorzugt 3 - 50 Gew.-%, insbesondere bevorzugt 5 - 35 Gew.-% eines Pfropfproduktes, und

C. 0 - 1 Gew.-%, bevorzugt 0,1 - 0,8 Gew.-%, insbesondere bevorzugt 0,2 - 0,7 Gew.-%, bezogen auf das Gesamtgewicht in A. und B., Polytetrafluorethylen,

die dadurch gekennzeichnet ist, daß das Pfropfprodukt B. besteht aus:

B1. 65 - 85 Gew.-% einer vernetzten, teilchenförmigen elastomeren Pfropfgrundlage mit einem durchschnittlichen Teilchendurchmesser ($d_{50}$) von 0.25 - 0.8 µm, einem Gelgehalt von wenigstens 70 Gew.-% und einer Glasübergangstemperatur < -20° C, und

B2. 35 - 15 Gew.-% einer Pfropfauflage aus Vinylmonomerpolymerisat, das zu mehr als 40 Gew.-%, bezogen auf B2, auf den Kautschuk B1, aufgepfropft vorliegt, wobei die Pfropfauflage erhalten wurde durch Pfropfpolymerisation einer Monomermischung aus:

B2.1. 99 - 80 Gew.-Teilen, bevorzugt 98 - 82 Gew.-Teilen, inbesondere bevorzugt 97 - 85 Gew.-Teilen Methylmethacrylat.

B2.2. 1 - 20 Gew.-Teilen, bevorzugt 2 - 18 Gew.-Teilen, insbesondere bevorzugt 3 - 15 Gew.-Teilen eines primären oder sekundären aliphatischen Esters der Acrylsäure mit 2 - 10 C-Atomen im Alkoholteil,

B2.3. 0 - 4 Gew.-Teilen, bevorzugt 0,1 - 3 Gew.-Teilen, insbesondere bevorzugt 0,2 - 2,5 Gew.-Teilen eines Urethans mit zur Copolymerisation mit B2.1 und B2.2 befähigten Acrylsäureester- oder Methacrylsäureestergruppen im Molekül und

B2.4. 0 - 4 Gew.-Teilen, bevorzugt 0.1 - 3 Gew.-Teilen, insbesondere bevorzugt 0,2 - 2.5 Gew.-Teilen eines tertiären Butylesters der Acrylsäure oder Methacrylsäure,

in Gegenwart eines wässrigen Latex der Pfropfgrundlage B1..

Bevorzugte Formmassen enthalten Polytetrafluorethylen C) in hochdisperser Form. Bevorzugt sind weiterhin Formmassen, die Pfropfprodukte B) aus 65 - 85 Gew.-% eines Dienkautschuks oder eines Acrylatkautschuks enthalten.

Besonders bevorzugt sind Formmassen enthaltend Pfropfprodukte, deren Pfropfäste durch Copolymerisation von Mischungen aus (B2.1) 97 - 85 Gew.-Teilen Methylmethacrylat (B2.2), 3 - 15 Gew.-Teilen eines primären oder sekundären Alkylacrylats mit 2 - 10 C-Atomen im Alkoholteil des Moleküls, (B2.2) 0,2 - 2,5 Gew.-Teilen eines Acrylaturethans der allgemeinen Formel I

$$H_2C{=}\overset{\displaystyle R}{\overset{|}{C}}\text{-COO-X-OOC-NH-}R^1 \qquad (I)$$

$R = H, CH_3$
$X = C_2\text{-}C_{10}$-Alkylen
$R^1 = C_1\text{-}C_{18}$-Kohlenwasserstoffrest

oder (B2.4) 0,2 - 2.5 Gew.-Teile eines tertiären Acrylsäurebutylesters gebildet worden sind. Die Menge an Comonomeren B2.3) und B2.4) ist so klein, daß auch unter Verarbeitungsbedingungen keine die Oberflächenqualität der Formkörper beeinträchtigenden Mengen an Abspaltungsprodukten entstehen; sie verbessern im Vergleich zu z. B. DE-OS-2 941 025 die Eigenschaften der Formmassen durch ein synergistisches Zusammenwirken mit der erfindungsgemäßen Methylmethacrylat/Alkylacrylat-Pfropfhülle.

Als Polyamide eignen sich amorphe und teilkristalline Polyamide. So können als teilkristalline Polyamide für die erfindungsgemäßen Formmassen Polyamid-6, Polyamid-6,6 und entsprechende Copolymerisate aus diesen beiden Komponenten eingesetzt werden. Weiterhin kommen teilkristalline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylendiamin und/oder Hexamethylendiamin und/oder 2,2,4-Trimethylhexamethylendiamin und/oder 2,4,4-Trimethylhexamethylendiamin und/oder Isophorondiamin besteht und deren Zusammensetzung bekannt ist.

Außerdem sind Polyamide zu nennen, die ganz oder teilweise aus Lactamen mit 7 - 12 C-Atomen, gegebenenfalls unter Mitverwendung einer oder mehrerer der oben genannten Ausgangskomponenten, hergestellt werden.

Besonders bevorzugte teilkristalline Polyamide sind Poly-amid-6 und Polyamid-6,6.

Als amorphe Polyamide können bekannte Produkte eingesetzt werden. Sie werden erhalten durch Polykondensation von Diaminen wie Ethylendiamin, Hexamethylendiamin, Decamethylendiamin, 2,2,4 und/oder 2,4,4-Trimethylhexamethylendiamin, m- und/oder p-Xylylendiamin, Bis-(4-aminocyclohexyl)-methan, Bis-(4-aminocyclohexyl)-propan, 3,3'-Dimethyl-4,4'-diamino-dicyclohexylmethan, 3-Aminomethyl-3,5,5-trimethyl-cyclohexylamin, 2,5- und/oder 2,6-Bis-(aminomethyl)-norbornan und/oder 1,4-Diamino-methylcyclohexan mit Dicarbonsäuren wie Oxalsäure, Adipinsäure, Azelainsäure, Decandicarbonsäure, Heptadecandicarbonsäure, 2,2,4- und/oder 2,4,4-Trimethyladipinsäure, Isophthalsäure oder Terephthalsäure. Auch Copolymere, die durch Polykondensation mehrerer Monomerer erhalten werden, sind geeignet, ferner Copolymere, die unter Zusatz von Aminocarbonsäuren wie ε-Aminocapronsäure, ω-Aminoundecansäure oder ω-Aminolaurinsäure oder ihren Lactamen, hergestellt werden.

Besonders geeignete amorphe Polyamide sind die Polyamide hergestellt aus Isophthalsäure, Hexamethylendiamin und weiteren Diaminen wie 4,4'-Diaminodicyclohexylmethan, Isophorondiamin, 2,2,4- und/oder 2,4,4-Trimethylhexamethylendiamin, 2,5- und/oder 2,6-Bis-(aminomethyl)-norbornan; oder aus Isophthalsäure, 4,4'-Diamino-dicyclohexylmethan und ε-Caprolactam; oder aus Isophthalsäure, 3,3-Dimethyl-4,4'-diamino-dicyclohexylmethan und Laurinlactam; oder aus Terephthalsäure und dem Isomerengemisch aus 2,2,4- und/oder 2,4,4-Trimethylhexamethylendiamin.

Anstelle des reinen 4,4'-Diaminodicyclohexylmethans können auch Gemische der stellungsisomeren Diaminodicyclohexylmethane eingesetzt werden, die sich zusammensetzen aus:

70 - 99 Mol-% des 4,4'-Diaminoisomeren
1 - 30 Mol-% des 2,4'-Diaminoisomeren
0 - 2 Mol-% des 2,2'-Diaminoisomeren und

gegebenenfalls entsprechend höher kondensierten Diaminen, die durch Hydrierung von Diaminodiphenylmethan technischer Qualität erhalten werden. Die Isophthalsäure kann bis zu 30 % durch Terephthalsäure ersetzt sein.

Die Polyamide sollen vorzugsweise eine relative Viskosität (gemessen an einer 1-Gew.-%-igen Lösung in m-Kresol bei 25°C) von 2,0 - 5,0, besonders bevorzugt von 2,5 - 4,0 aufweisen.

In den erfindungsgemäßen Pfropfcopolymerisaten sind Elastomere enthalten mit Glasübergangstemperaturen kleiner -20°C, z. B. Dienkautschuke (insbesondere Polybutadien, Polychloropren, Polyisopren), Olefinkautschuke oder Acrylatkautschuke (insbesondere Homo- oder Copolymere von Acrylsäurealkylestern mit bis zu 12 C-Atomen in der Estergruppe, die zur möglichen Vernetzung mit polyfunktionellen ungesättigten Monomeren copolymerisiert sein können). Bevorzugte Kautschuke sind Polybutadien, Copolymere von Butadien mit Styrol oder Acrylnitril und Acrylatkautschuke.

Acrylatkautschuke sind besonders vorteilhaft, wenn sie eine Kern-Mantel-Struktur aufweisen, d. h. einen Kern aus einem anderen Polymerisat enthalten, der von einer Hülle aus vernetztem Alkylacrylatkautschuk umgegen ist. Solche Kautschuke sind bekannt.

Die Kautschuke müssen teilvernetzt oder hochvernetzt vorliegen. Sie besitzen eine teilchenförmige Struktur

mit mittleren Teilchendurchmessern ($d_{50}$) von 0,25 - 0,8 μm (insbesondere 0,3 - 0,6 μm; besitzen Gelgehalte von wenigstens 70 Gew.-%, vorzugsweise wenigstens 80 Gew.-%.

Von der Pfropfauflage B2 sind insbesondere mehr als 50 Gew.-% auf die Pfropfgrundlage B1 Pfropfpolymerisat.

Die Pfropfauflage B2 des Pfropfproduktes B wird durch Polymerisation der entsprechenden Monomeren in Gegenwart eines Latex (Emulsion) der Pfropfgrundlage B1 erzeugt. Die Polymerisation kann durch Radikalinitiatoren initiiert werden, z. B. mit Persulfaten, Peroxiden, Percarbonaten, Perestern, insbesondere aber mit wasserlöslichen Initiatoren wie Persulfaten oder Redoxinitiatorsystemen; Diese Polymerisationsverfahren sind bekannt.

Zur Herstellung der Pfropfauflage B2 wird eine Mischung aus 99 - 80, vorzugsweise 97 - 85 Gew.-Teile Methylmethacrylat, 1 - 20, vorzugsweise 3 - 15 Gew.-Teile eines primären oder sekundären aliphatischen Acrylsäureesters (mit 2 - 10 C-Atomen im Alkoholteil des Moleküls), insbesondere Ethylacrylat, Propylacrylat, Butylacrylat,

Hexylacrylat, Ethylhexylacrylat, 0 - 4 Gew.-Teilen, vorzugsweise 0,2 - 2,5 Gew.-Teilen eines Urethans (II) oder 0 - 4 Gew.-Teilen, vorzugsweise 0,2 - 2,5 Gew.-Teilen tertiären Acrylsäurebutylester, in Anwesenheit der Emulsion B1 pfropfpolymerisiert, insbesondere im Temperaturbereich von 40 - 80° C.

Besonders geeignete Urethane (II) sind Addukte aus Monoisocyanaten und Hydroxyalkylacrylsäure- oder -methacrylsäureestern, wie

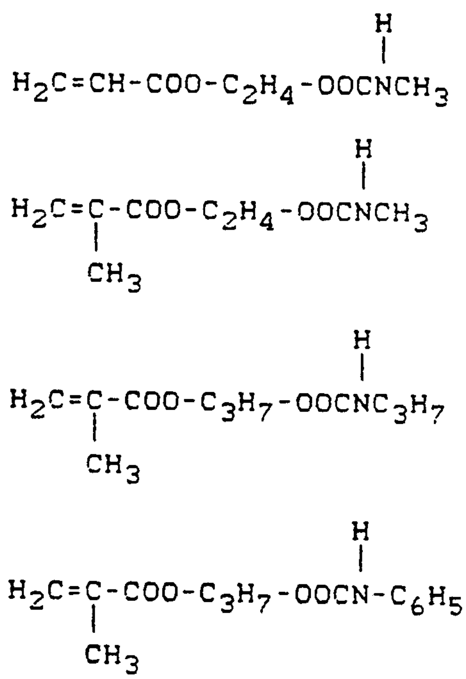

(II)

Bevorzugte Monoisocyanate sind Methyl-, Ethyl-, Propyl-, Butyl-, Cyclohexyl-, Phenyl-, p-Methoxyphenyl- und p-Methylphenylisocyanat.

Erfindungsgemäß geeignete Tetrafluorethylenpolymerisate sind bekannte Polymere mit Fluorgehalten von 65 - 76 Gew.-%, vorzugsweise 70 - 76 Gew.-%. Beispiele sind Polytetrafluorethylen, Tetrafluorethylen-Hexafluorpropylen-Copolymere oder Tetrafluorethylencopolymerisate mit geringen Mengen fluorfreier, copolymerisierbarer, ethylenisch ungesättigter Monomeren. Sie werden als feinteilige wäßrige Dispersion mit einem Feststromgehalt von 30 bis 60 Gew.-% eingesetzt. Der Durchmesser der dispergierten Teilchen liegt bei 0,05 - 20 μm, vorzugsweise 0,08 - 10 μm. (Vgl. "Vinyl and Related Polymers" von Schildknecht, Verlag John Wiley and Sons, Inc., New York, 1952, S. 484-494; "Fluorpolymers" von Wall, Verlag Wiley- Interscience, Abteilung von John Wiley and Sons, Inc. New York, 1972; "Encyclopedia of Polymer Science and Technology", Verlag Interscience Publishers, Abteilung von John Wiley and Sons, Inc., New York, Band 13, 1970, S. 623 - 654).

Um diese Feinteiligkeit auch in der thermoplastischen Formmasse zu gewährleisten, muß die Komponente C) wie folgt eingebracht werden: Zuerst wird die wässrige Emulsion des Pfropfpolymerisates B) mit einer wässrigen, feinteiligen Dispersion von C) vermischt; die Mischung wird danach durch herkömmliche Verfahren aufgearbeitet (z. B. durch Koagulation mit Salzen, Säuren, Basen und anschließende Trocknung, oder durch Sprühtrocknung, Gefriertrocknung). Das resultierende Material, bestehend aus B) und anteilsmäßigem C) wird danach mit dem Polyamid A) über den Schmelzzustand vermischt (compoundiert).

Wird das Fluorpolymer C) nicht nach diesem bevorzugten Verfahren eingearbeitet, so werden Formmassen erhalten, in denen C) nicht genügend feinteilig ist; es muß dann der Gehalt an C) in den Formmassen erhöht oder ein Qualitätsverlust hingenommen werden.

Die erfindungsgemäßen Polyamidformmassen können übliche Additive, wie Gleit- und Entformungsmittel,

Nukleierungsmittel, Stabilisatoren, Füll- und Verstärkungsstoffe, Flammschutzmittel sowie Farbstoffe enthalten.

Die Formmassen können in üblichen Mischaggregaten, wie Walzen, Knetern, Ein- und Mehrwellenextrudern hergestellt werden.

Wenn auch in den meisten Fällen sämtliche Komponenten zweckmäßigerweise in einem Schritt gemischt werden, kann es manchmal auch empfehlenswert sein, zuerst eine oder gar zwei Komponenten wegzulassen und erst zu einem späteren Zeitpunkt zuzumischen.

So können die erfindungsgemäßen Formmassen auf den genannten Mischaggregaten hergestellt werden, indem die beiden Komponenten A) und B) gemeinsam aufgeschmolzen und homogenisiert werden oder indem das Pfropfpolymerisat B) in die Schmelze des Polyamids A) eingearbeitet wird.

Die Temperatur bei der Herstellung der Mischungen sollte mindestens 10°C und zweckmäßig höchstens 80°C oberhalb des Schmelzpunktes des Polyamids liegen.

Die erfindungsgemäßen Formmassen können zur Herstellung in Formteilen durch Spritzguß- und Extrusion verwendet werden, insbesondere wo die beschriebenen Eigenschaften gefordert werden, z. B. für Stoßfänger und Karosserieteile in Kraftfahrzeugen.

**Beispiele**

A. Verwendete Komponenten / Erfindungsgemäße Pfropfpolymerisate

I. Polyamid-6 mit einer relativen Viskosität (gemessen an einer 1-Gew.-%-igen Lösung in m-Kresol bei 25°C) von 3,0.

II. Polyamid-66 mit einer relativen Viskosität von 3,0, gemessen wie I.

III. Pfropfprodukte

**Elastomerpfropfgrundlagen**

IIIA:

Polybutadienlatex, hergestellt durch wässrige Emulsionspolymerisation, mit einem Feststoffgehalt von 50 Gew.-%, einem mittleren Teilchendurchmesser ($d_{50}$-Wert) von 0,4 µm und einem Gelgehalt von 85 Gew.-%.

IIIB:

Polybutadienlatex, hergestellt durch wässrige Emulsionspolymerisation, mit einem Feststoffgehalt von 40 Gew.-%, einem mittleren Teilchendurchmesser ($d_{50}$-Wert) von 0,15 µm und einem Gelgehalt von 88 Gew.-%.

IIIC:

Polybutadienlatex, hergestellt durch wässrige Emulsionspolymerisation, mit einem Feststoffgehalt von 50 Gew.-%, einem mittleren Teilchendurchmesser ($d_{50}$-Wert) von 0,38 µm und einem Gelgehalt von 49 Gew.-%.

**Polytetrafluorethylen (PTFE)**

Eingesetzt wurde eine Polytetrafluorethylen-Dispersion mit einem Feststoffgehalt von 60 Gew.-%; der Teilchendurchmesser liegt zwischen 0,05 und 0,5 µm (ermittelt durch UZ-Messungen).

Zur Herstellung PTFE-haltiger Pfropfprodukte wird der jeweilige Pfropfproduktlatex mit dem PTFE-Latex vermischt (die Zusammensetzung der Polymerisate in dieser Mischung ist aus Tabelle 1 , Beispiel III 15 bis III 19 zu entnehmen). Die Latexmischung wird anschließend bei einem pH-Wert von 4 - 5 so koaguliert, daß eine Mischung aus Pfropfprodukt und PTFE in hochdisperser Form gebildet wird.

**Herstellung der Pfropfprodukte der Beispiele III 1 bis III 29**

In einem Reaktor werden Latices der Pfropfgrundlage vorgelegt, so daß 1184 Gew.-Teile Kautschuk eingesetzt werden. Im Falle der Verwendung von Elastomer IIIB wird danach soviel Wasser dazugegeben, daß der Polymerfeststoffgehalt der Vorlage 50 Gew.-% beträgt. Anschließend verdünnt man jeweils weiter mit soviel Wasser, bis sich ein Polymerfeststoffgehalt von 36,2 Gew.-% eingestellt hat. Bei einer Temperatur von 65 - 70°C startet man die Polymerisation durch Zugabe einer Lösung von 3,5 Gew.-Teilen Kaliumperoxodisulfat in 100 Gew.-Teilen Wasser. Danach werden folgende Mengenströme bei 65 - 70°C unter Rühren innerhalb von 4 Stunden gleichmäßig in den Reaktor eindosiert:

1) 300 Gew.-Teile Monomermischung der Zusammensetzung aus Tabelle 1

2) 410 Gew.-Teile Wasser
29 Gew.-Teile Na-Salz der disproportionierten Abietinsäure
22 Gew.-Teile 1n-Natronlauge

Nach Beendigung der Zudosierung wird noch bei 65°C nachpolymerisiert. Nach Stabilisierung des Latex mit 1,6 Gew.-% phenolischen Antioxidantien und gegebenenfalls Abmischung mit PTFE-Latex wird durch Koagulation mittels Essigsäure/$MgSO_4$-Mischung bei Temperaturen von 70 - 98°C aufgearbeitet. Nach Waschen und Reinigen der Pfropfprodukte wird zum trockenen Pulver aufgearbeitet.

**Tabelle 1:**
In den Formmassen verwendete Pfropfprodukte

| Lfd.Nr. | Elastomer (80 Gew.-Tl.) Typ | Zusammensetzung der Pfropfmonomere (20 Gew.-Tl.) MMA (%) | nBA (%) | MUR (%) | tBA (%) | Polytetrafluorethylen (PTFE)-gehalt im Pfropfprodukt |
|---|---|---|---|---|---|---|
| III 1 | III A | 100 | 0 | | | |
| III 2 | " | 95 | 5 | | | |
| III 3 | " | 90 | 10 | | | |
| III 4 | " | 85 | 15 | | | |
| III 5 | " | 80 | 20 | | | |
| III 6 | " | 75 | 25 | | | |
| III 7 | " | 70 | 30 | | | |
| III 8 | III B | 100 | 0 | | | |
| III 9 | " | 95 | 5 | | | |
| III 10 | " | 90 | 10 | | | |
| III 11 | " | 85 | 15 | | | |
| III 12 | " | 80 | 20 | | | |
| III 13 | " | 75 | 25 | | | |
| III 14 | III C | 90 | 10 | | | |
| III 15 | III A | 100 | 0 | | | 1,7 Gew.-% |
| III 16 | " | 95 | 5 | | | " |
| III 17 | " | 90 | 10 | | | " |
| III 18 | " | 85 | 15 | | | " |
| III 19 | " | 80 | 20 | | | " |

MMA = Methylmethacrylat
nBA = n-Butylacrylat
tBA = tert.-Butylacrylat

$$MUR = CH_2 = \underset{}{\overset{CH_3}{\overset{|}{C}}}-COOC_2H_5OOCNH-CH_3$$

**Tabelle 1:** (Fortsetzung)

| Lfd.Nr. | Elastomer (80 Gew.-Tl.) Typ | Zusammensetzung der Pfropfmonomere (20 Gew.-Tl.) MMA (%) | nBA (%) | MUR (%) | tBA (%) | Polytetrafluorethylen (PTFE)-gehalt im Pfropfprodukt |
|---|---|---|---|---|---|---|
| III 20 | " | 98 | 0 | 2 | | |
| III 21 | " | 93 | 5 | 2 | | |
| III 22 | " | 88 | 10 | 2 | | |
| III 23 | " | 83 | 15 | 2 | | |
| III 24 | " | 78 | 20 | 2 | | |
| III 25 | " | 98 | 0 | | 2 | |
| III 26 | " | 93 | 5 | | 2 | |
| III 27 | " | 88 | 10 | | 2 | |
| III 28 | " | 83 | 15 | | 2 | |
| III 29 | " | 78 | 20 | | 2 | |

MMA = Methylmethacrylat, nBA = n-Butylacrylat, t-BA = tert.-Butylacrylat,

$$MUR = CH_2=\underset{CH_3}{\underset{|}{C}}-COO-C_2H_4-OOC-\underset{H}{\underset{|}{N}}CH_3$$

B. Herstellung und Prüfung der Polyamidformmassen

**Beispiele 1 - 37**

Auf einem kontinuierlich arbeitenden Doppelwellenextruder wurden die Komponenten aufgeschmolzen und homogenisiert. Die Zylindertemperaturen wurden so gewählt, daß die in den Tabellen 2 - 6 angegebenen Massetemperaturen eingehalten wurden. Der Schmelzstrang wurde vor dem Austritt aus der Düse entgast, in Wasser abgekühlt, granuliert und getrocknet.

Von den Formmassen wurden auf einer Spritzgußmaschine ASTM-Stäbe hergestellt. Geprüft wurde die Kerbschlagzähigkeit nach Izod bei verschiedenen Temperaturen und daraus der Spröd/Zäh-Übergang ermittelt. Weiterhin wurde die Fließlänge bestimmt.

**Tabelle 2:**
Zusammensetzung und Eigenschaften der Formmassen

| Bsp. | Komponenten Polyamid 1) Typ | Gew.-% | Pfropfprodukt Typ (s.Tab.1) | n-Butylacrylat (Gew.-% der Pfropfhülle) | Gew-% | Spröd/Zäh-Übergang (°C) | Fließlänge (cm) |
|---|---|---|---|---|---|---|---|
| 1 | I 2) | 70 | III 1 | 0 | 30 | -30 | 27 |
| 2 | I | " | III 2 | 5 | " | -40 | 31 |
| 3 | I | " | III 3 | 10 | " | -45 | 35 |
| 4 | I | " | III 4 | 15 | " | -35 | 37 |
| 5 | I | " | III 5 | 20 | " | -25 | 39 |
| 6 | I 2) | " | III 6 | 25 | " | -20 | 40 |
| 7 | I 2) | " | III 7 | 30 | " | -20 | 41 |
| 8 | I 2) | 80 | III 1 | 0 | 20 | 0 | 34 |
| 9 | I | " | III 2 | 5 | " | -5 | 37 |
| 10 | I | " | III 3 | 10 | " | -10 | 39 |
| 11 | I | " | III 4 | 15 | " | 0 | 40 |
| 12 | I | " | III 5 | 20 | " | +5 | 41 |

1) Die Massetemperaturen im Extruder und in der Spritzgußmaschine betrugen 270°C
2) Vergleichsbeispiele

Wie aus Tabelle 2 hervorgeht, beobachtet man bei Gehalten bis zu 10 Gew.-Teilen n-Butylacrylat in der Pfropfhülle des Pfropfproduktes in daraus hergestellten Polyamidformmassen sowohl eine deutliche Verbesserung der Tieftemperaturzähigkeit als auch der Fließlänge. Im erfindungsgemäßen Bereich (bis 20 Gew.-Teile n-Butylacrylat in der Pfropfhülle des Pfropfproduktes) weisen die Polyamidformmassen eine das Vergleichsbeispiel übertreffende Qualität hinsichtlich der Kombination von Fließverhalten und Tieftemperaturzähigkeit auf. Erst bei höheren Gehalten an n-Butylacrylat (>20 Gew.-Teile der Pfropfhülle) kommt der dann deutliche Verlust an Tieftemperaturzähigkeit zum Tragen und überkompensiert den leichten Gewinn im Fließverhalten.

**Tabelle 3:**
Zusammensetzung und Eigenschaften der Formmassen
Vergleich

| Bsp. | Komponenten Polyamid 1) Typ | Gew.-% | Pfropfprodukt Typ (s.Tab.1) | n-Butylacrylat (Gew.-% der Pfropfhülle) | Gew-% | Spröd/Zäh-Übergang (°C) | Fließlänge (cm) |
|---|---|---|---|---|---|---|---|
| 13 | I | 70 | III 8 | 0 | 30 | -20 | 28 |
| 14 | I | " | III 9 | 5 | " | -15 | 29 |
| 15 | I | " | III 10 | 10 | " | -15 | 31 |
| 16 | I | " | III 11 | 15 | " | -10 | 32 |
| 17 | I | " | III 12 | 20 | " | -10 | 34 |
| 18 | I | " | III 13 | 25 | " | -5 | 35 |

1) Die Massetemperaturen im Extruder und in der Spritzgußmaschine betrugen 270°C

**Tabelle 4:**
Zusammensetzung und Eigenschaften der Formmassen

| Bsp. | Polyamid 1) Typ | Gew.-% | Pfropfprodukt Typ (s.Tab.1) | n-Butylacrylat (Gew.-% der Pfropfhülle) | Gew-% | Spröd/Zäh-Übergang (°C) | Fließlänge (cm) |
|---|---|---|---|---|---|---|---|
| 19 | I | 70 | III 3 | 10 | 30 | -45 | 35 |
| 20 | I2) | " | III 14 | 10 | " | -25 | 34 |
| 21 | I | 80 | III 3 | 10 | 20 | -10 | 39 |
| 22 | I2) | " | III 14 | 10 | " | -5 | 37 |

1) Die Massetemperaturen im Extruder und in der Spritzgußmaschine betrugen 270°C
2) Vergleichsbeispiele

Aus Tabellen 3 und 4 wird ersichtlich, daß der erfindungsgemäße Effekt - höhere Zähigkeit und besseres Verarbeitungsverhalten - nicht beobachtet wird, wenn zur Herstellung der Polyamidformmassen Pfropfpolymerisate verwendet werden, die auf der Basis von Elastomeren mit nicht erfindungsgemäßen Strukturparametern (Teilchendurchmesser, Gelgehalt) erhalten werden.

**Tabelle 5:**
Zusammensetzung und Eigenschaften der Formmassen

| Bsp. | Polyamid 1) Typ | Gew.-% | Pfropfprodukt Typ (s.Tab.1) | n-Butylacrylat (Gew.-% der Pfropfhülle) | Gew-% | Spröd/Zäh-Übergang (°C) | Fließlänge (cm) |
|---|---|---|---|---|---|---|---|
| 23 | I2 | | III 15 | 0 | 30 | -30 | 26 |
| 24 | I | | III 16 | 5 | " | -35 | 29 |
| 25 | I | | III 17 | 10 | " | -40 | 33 |
| 26 | I | | III 18 | 15 | " | -35 | 35 |
| 27 | I | | III 19 | 20 | " | -25 | 36 |

1) Die Massetemperaturen im Extruder und in der Spritzgußmaschine betrugen 270°C
2) Vergleichsbeispiel

Zu Tabelle 5:
Der PTFE-Zusatz zum Pfropfprodukt erhöht das Zähigkeitsniveau der PA-Formmassen, ohne die Lage des Spröd/Zäh-Übergangs wesentlich zu beeinflussen. So findet man für Formmassen nach Beispiel 3 eine Izod-Kerbschlagzähigkeit bei Raumtemperatur von 1068 J/m, während die hinsichtlich des Pfropfprodukt-Grundtyps vergleichbaren Formmassen nach Beispiel 25, die jedoch zusätzlich PTFE enthalten, eine Izod-Kerbschlagzähigkeit bei Raumtemperatur von 1247 J/m aufwiesen.

**Tabelle 6:**
Zusammensetzung und Eigenschaften der Formmassen

| Bsp. | Polyamid 1) Typ | Gew.-% | Pfropfprodukt Typ (s.Tab.1) | n-Butylacrylat (Gew.-% der Pfropfhülle) | Gew-% | Spröd/Zäh-Übergang (°C) | Fließlänge (cm) |
|---|---|---|---|---|---|---|---|
| 28 | I1)2) | 70 | III 20 | 0 | 30 | -40 | 30 |
| 29 | I | " | III 21 | 5 | " | -50 | 33 |
| 30 | I | " | III 22 | 10 | " | -55 | 38 |
| 31 | I | " | III 23 | 15 | " | -45 | 39 |
| 32 | I | " | III 24 | 20 | " | -35 | 41 |
| 33 | II1)2) | " | III 25 | 0 | " | -15 | 31 |
| 34 | II | " | III 26 | 5 | " | -20 | 32 |
| 35 | II | " | III 27 | 10 | " | -30 | 36 |
| 36 | II | " | III 28 | 15 | " | -25 | 38 |
| 37 | II | " | III 29 | 20 | " | -10 | 40 |

1) Die Massetemperaturen im Extruder und in der Spritzgußmaschine betrugen 270° C (I) bzw. 280° C (II)
2) Vergleichsbeispiele

Zu Tabelle 6:
Durch den Einbau geeigneter Comonomere in die erfindungsgemäßen Pfropfprodukte läßt sich der Spröd/Zäh-Übergang weiter absenken. Die im erfindungsgemäßen Bereich beobachteten Vorteile, d. h. eine optimale Kombination von Zähigkeit und rheologischem Verhalten, werden durch diese Comonomere sogar noch verstärkt. Der erfindungsgemäße Effekt ist dabei nicht auf einen Polyamidtyp beschränkt, sondern tritt bei allen untersuchten Polyamiden auf.

## Patentansprüche

1. Thermoplastische Formmassen aus
A) 35 - 99 Gew.-% eines Polyamids
B) 1 - 65 Gew.-% eines Pfropfproduktes und
C) 0 - 1 Gew.-%, bezogen auf das Gesamtgewicht in A) und B), Polytetrafluorethylen.
dadurch gekennzeichnet. daß das Pfropfprodukt B) besteht aus
B1) 65 - 85 Gew.-% einer vernetzten, teilchenförmigen elastomeren Pfropfgrundlage mit einem durchschnittlichen Teilchendurchmesser ($d_{50}$) von 0,25 - 0,8 μm, einem Gelgehalt von wenigstens 70 Gew.-% und einer Glasübergangstemperatur kleiner -20° C.
B2) 35 - 15 Gew.-% eines Vinylmonomerpolymerisats, das zu mehr als 40 Gew.-%. bezogen auf B2., auf den Kautschuk B1. aufgepfropft vorliegt, wobei die Pfropfauflage erhalten wurde durch Pfropfpolymerisation einer Monomermischung aus:
B2.1. 99 - 80 Gew.-Teilen Methylmethacrylat.
B2.2. 1 - 20 Gew.-Teilen eines primären oder sekundären aliphatischen Esters der Acrylsäure mit 2 - 10 C-Atomen im Alkoholteil.
B2.3. 0 - 4 Gew.-Teilen eines Urethans mit zur Copolymerisation mit B2.1 und B2.2 befähigten Acrylsäureester- oder Methacrylsäureestergruppen im Molekül und
B2.4. 0 - 4 Gew.-Teilen eines tertiären Butylesters der Acrylsäure oder Methacrylsäure,
in Gegenwart eines Latex der Pfropfgrundlage B1).
2. Formmassen nach Anspruch 1, dadurch gekennzeichnet, daß sie die Komponente C) in Mengen von 0,1 - 0,8 Gew.-%, bezogen auf das Gesamtgewicht in A und B enthalten, und C) in hochdisperser Form vorliegt.
3. Formmasse nach Anspruch 1, dadurch gekennzeichnet, daß das Pfropfprodukt B) aus 65 - 85 Gew.-% eines Dienkautschuks oder eines Acrylatksutschuks (B1) aufgebaut ist und 35 - 15 Gew.-% des Vinylmonomerpolymerisats (B2) welches durch Emulsionspfropfpolymerisation einer Mischung aus 99 - 80 Gew.-Teilen Methylmethacrylat und 1 - 20 Gew.-Teilen eines primären oder sekundären $C_{2-10}$-Alkylacrylates in Gegenwart von B1) erhalten wurde.
4. Formmasse nach Anspruch 3, dadurch gekennzeichnet, daß das Vinylmonomerpolymerisat (B2) aus einer Mischung aus 98 - 82 Gew.-Teilen Methylmethacrylat, 2 - 18 Gew.-Teilen primärem $C_{2-10}$-Alkylacrylat und 0,1 - 3 Gew.-Teilen eines Urethans B2.3) oder 0,1 - 3 Gew.-Teile eines tertiären Acrylsäurebutylesters B2.4) hergestellt wurde.
5. Formmassen nach Anspruch 1 - 4, dadurch gekennzeichnet, daß als Polyamidkomponente Polyamid-6, Polyamid-66 oder amorphes Polyamid verwendet wurde.
6. Verfahren zur Herstellung der thermoplastischen Formmassen gemäß Anspruch 1 dadurch gekennzeichnet, daß man zuerst eine wäßrige Dispersion von C und einen Latex von B mischt, die Mischung aufarbeitet, und das resultierende feste Produkt mit A über den Schmelzzustand mischt.

## Claims

1. Thermoplastic molding compounds of
A) 35 to 99 % by weight of a polyamide,
B) 1 to 65 % by weight of a graft product and
C) 0 to 1 % by weight, based on the total weight in A) + B), of polytetrafluoroethylene,
characterized in that the graft product B) consists of
B1) 65 to 85 % by weight of a crosslinked, particulate elastomeric graft base having an average particle diameter ($d_{50}$) of from 0.25 to 0.8 μm, a gel content of at least 70 % by weight and a glass transition temperature below -20.C,
B2) 35 to 15 % by weight of a vinyl monomer polymer, of which more than 40 % by weight, based on B2., is grafted onto the rubber B1., the graft shell having been obtained by graft polymerization of a monomer mixture of:
B2.1. 99 to 80 parts by weight methyl methacrylate,

B2.2. 1 to 20 parts by weight of a primary or secondary aliphatic ester of acrylic acid containing 2 to 10 C atoms in the alcohol part,

B2.3. 0 to 4 parts by weight of a urethane containing acrylate or methacrylate groups in the molecule capable of copolymerization with B2.1 and B2.2 and

B2.4. 0 to 4 parts by weight of a tertiary butyl ester of acrylic acid or methacrylic acid,
in the presence of a latex of the graft base B1).

2. Molding compounds as claimed in claim 1, characterized in that they contain component C) in quantities of from 0.1 to 0.8 % by weight, based on the total weight in A and B, and C) in highly disperse form.

3. A molding compound as claimed in claim 1, characterized in that the graft product B) consists of 65 to 85 % by weight of a diene rubber or an acrylate rubber (B1) and 35 to 15 % by weight of the vinyl monomer polymer (B2) which is obtained by emulsion graft polymerization of a mixture of 99 to 80 parts by weight methyl methacrylate and 1 to 20 parts by weight of a primary or secondary $C_{2-10}$ alkyl acrylate in the presence of B1).

4. A molding compound as claimed in claim 3, characterized in that the vinyl monomer polymer (B2) is prepared from a mixture of 98 to 82 parts by weight methyl methacrylate, 2 to 18 parts by weight primary $C_{2-10}$ alkyl acrylate and 0.1 to 3 parts by weight of a urethane B2.3) or 0.1 to 3 parts by weight of a tertiary butyl acrylate B2.4).

5. Molding compounds as claimed in claims 1 to 4, characterized in that polyamide-6, polyamide-66 or amorphous polyamide is used as the polyamide component.

6. A process for the production of the thermoplastic molding compounds claimed in claim 1, characterized in that an aqueous dispersion of C and a latex of B are first mixed, the mixture is worked up and the resulting solid product is mixed with A in the melt.

## Revendications

1. Mélanges à mouler thermoplastiques constitués de

A) 35 à 99 % en poids d'un polyamide,

B) 1 à 65 % en poids d'un produit de greffage, et

C) 0 à 1 % en poids, par rapport au poids total de A) et B), de polytétrafluoréthylène,

caractérisés en ce que le produit de greffage

B) est constitué de

B1) 65 à 85 % en poids d'un substrat de greffage élastomérique réticulé en particules ayant un diamètre moyen ($d_{50}$) des particules de 0,25 à 0,8 μm, une teneur en gel d'au moins 70 % en poids et une température de transition vitreuse inférieure à -20° C,

B2) 35 à 15 % en poids d'un polymérisat de monomere vinylique qui est présent en proportion de plus de 40 % en poids, par rapport à B2, à l'état greffé sur le caoutchouc B1, le substrat de greffage ayant été obtenu par polymérisation de greffage d'un mélange de monomères comprenant:

B2.1. 99 - 80 parties en poids de méthacrylate de méthyle,

B2.2. 1 - 20 parties en poids d'un ester aliphatique primaire ou secondaire d'acide acrylique ayant 2 à 10 atomes de carbone dans la partie alcool,

B2.3. 0 - 4 parties en poids d'un uréthanne portant dans sa molécule des groupes ester d'acide acrylique ou d'acide méthacrylique aptes à la copolymérisation avec B2.1 et B2.2, et

B2.4. 0 - 4 parties en poids d'un ester tertiobutylique d'acide acrylique ou d'acide méthacrylique, en présence d'un latex du substrat de greffage B1).

2. Mélanges à mouler suivant la revendication 1, caractérisés en ce qu'ils contiennent le composant C) en quantités de 0,1 à 0,8 % en poids, par rapport au poids total de A et B, et en ce que C) est présent sous une forme très dispersée.

3. Mélange à mouler suivant la revendication 1, caractérisé en ce que le produit de greffage B) est constitué de 65 à 85 % en poids de caoutchouc diénique ou d'un caoutchouc d'acrylate (B1) et de 35 à 15 % en poids d'un polymérisat de monomère vinylique (B2) qui a été obtenu par polymérisation de greffage en émulsion d'un mélange de 99 - 80 parties en poids de méthacrylate de méthyle et de 1 à 20 parties en poids d'un acrylate d'alkyle en $C_2$ à $C_{10}$ primaire ou secondaire en présence de B1).

4. Mélange à mouler suivant la revendication 3, caractérisé en ce que le polymérisat de monomère vinylique (B2) a été préparé à partir d'un mélange de 98 - 82 parties en poids de méthacrylate de méthyle, 2 - 18 parties en poids d'acrylate d'alkyle en $C_2$ à $C_{10}$ primaire et 0,1 à 3 parties en poids d'un uréthanne B2.3) ou 0,1 - 3 parties en poids d'un ester butylique tertiaire d'acide acrylique B2.4).

5. Mélanges à mouler suivant les revendications 1 à 4, caractérisés en ce que le polyamide 6, le polyamide 66 ou un polyamide amorphe a été utilisé comme composant polyamidique.

6. Procédé de production des mélanges à mouler thermoplastiques suivant la revendication 1, caractérisé en ce qu'on mélange tout d'abord une dispersion aqueuse de C et un latex de B, on met en oeuvre le mélange et on mélange le produit solide résultant avec A en passant par l'état fondu.